# EUROPEAN PATENT APPLICATION

(11) **EP 4 411 540 A1**
(43) Date of publication of application: **07.08.2024**
(21) Application number: 22886098.7
(22) Date of filing: 28.10.2022
(51) Int. Cl.: G06F 9/48

(54) **DATA PROCESSING METHOD AND APPARATUS, AND COMPUTING DEVICE**

(30) Priority: 28.10.2021 CN 202111260264; 31.12.2021 CN 202111671457
(71) Applicant: Huawei Technologies Co., Ltd., Shenzhen, Guangdong 518129 (CN)
(72) Inventor: XIE, Shanggang, Shenzhen, Guangdong 518129 (CN); LING, Wenkai, Shenzhen, Guangdong 518129 (CN); LIN, Weibin, Shenzhen, Guangdong 518129 (CN); SHEN, Shengyu, Shenzhen, Guangdong 518129 (CN); CHEN, Xiaoyu, Shenzhen, Guangdong 518129 (CN)
(74) Representative: Körber, Martin Hans
(86) International application number: PCT/CN2022/128116
(87) International publication number: WO 2023/072223

(57) **Abstract**

This application discloses a data processing method, an apparatus, and a computing device. The computing device includes a scheduling apparatus and at least two processing unit sets, each processing unit set includes at least one processing unit, and the scheduling apparatus is communicatively connected to processing units in the at least two processing unit sets. The data processing method in this application includes: The scheduling apparatus receives a data processing request, where the data processing request includes a function identifier, and the function identifier indicates a function that needs to be called to process the data processing request; and further, the scheduling apparatus determines a first processing unit set from the at least two processing unit sets of the computing device based on the function identifier, and determines a target processing unit in the first processing unit set, and the determined target processing unit processes the data processing request, to obtain a data processing result.

## Description

This application claims priorities to Chinese Patent Application No. 202111260264.7, filed with the China National Intellectual Property Administration on October 28, 2021 and entitled "DATA PROCESSING APPARATUS, DEVICE, AND METHOD", and to Chinese Patent Application No. 202111671457.1, filed with the China National Intellectual Property Administration on December 31, 2021 and entitled "DATA PROCESSING METHOD, APPARATUS, AND COMPUTING DEVICE", both of which are incorporated herein by reference in their entireties.

### TECHNICAL FIELD

This application relates to the field of computer technologies, and in particular, to a data processing method, an apparatus, and a computing device.

### BACKGROUND

Data processing performed by a computing device mainly depends on a processing unit in the device. One computing device may include one or more general-purpose processing units, and a data processing response may be obtained by running a thread for data processing on the processing unit. Currently, in many application scenarios, limited processing resources (that is, resources of the processing unit) in a computing device need to be used to ensure data processing efficiency.

In the conventional technology, when a computing device processes a data processing request sent by a remote requesting device, or processes a data processing request delivered by an upper-layer service run on the device, the processing unit in the computing device completes obtaining, scheduling, and processing of the request. For example, the computing device obtains the data processing request sent by the remote requesting device from a network interface card by running a plurality of poll (poll) threads on one or more processing units, and then schedules the obtained request to a processing unit that has an idle resource, so that the processing unit runs the thread for data processing to respond to the data processing request. In the foregoing solution, because the resources of the processing unit in the computing device need to support a plurality of types of tasks, a response delay of the computing device to some data processing requests is excessively long in some cases, or the device cannot support a quantity of concurrent data processing requests, and a response failure occurs.

### SUMMARY

This application provides a data processing method, an apparatus, and a computing device. In a data processing scenario, in this application, a scheduling apparatus is disposed in a computing device to schedule a data processing request, so that a resource of a processing unit in the computing device can be more effectively used for data processing.

According to a first aspect, this application provides a data processing method. The method is applied to a computing device. The computing device includes a scheduling apparatus and at least two processing unit sets. Each processing unit set includes at least one processing unit. In addition, the scheduling apparatus is communicatively connected to processing units in the at least two processing unit sets. The data processing method includes: The scheduling apparatus receives a data processing request, where the data processing request includes a function identifier, and the function identifier indicates a function that needs to be called to process the data processing request; and further, the scheduling apparatus determines a first processing unit set from the at least two processing unit sets of the computing device based on the function identifier, determines a target processing unit in the first processing unit set, and the determined target processing processes the data processing request, to obtain a data processing result.

Each processing unit in the at least two processing unit sets may be a processor, for example, a central processing unit central processing unit (CPU), or may be a processor core, for example, a CPU core.

It should be noted that the scheduling apparatus may be a hardware circuit apparatus that is integrated on a mainboard of the computing device and that is close to any one or more processing unit sets of the at least two processing unit sets. Alternatively, the scheduling apparatus may be inserted into the mainboard of the computing device 100 as an independent component, for example, the scheduling apparatus may be a PCle card.

In the foregoing data processing method, the scheduling apparatus disposed in the computing device determines the first processing unit set and the target processing unit in a data processing process, avoiding a case that a dedicated thread (for example, a poll thread) is run on the processing unit of the computing device to obtain and schedule the data processing request, to enable a resource of the processing unit in the computing device to be more effectively used for request processing.

In a possible implementation of the first aspect, a computing capability of a processing unit in the first processing unit set is lower than a computing capability of a processing unit included in a second processing unit set in the at least two processing unit sets.

For example, a quantity of threads or a core frequency that can be supported by the processing unit in the first processing unit set is lower than a quantity of threads or a core frequency of the processing unit included in the second processing unit set in the at least two processing unit sets. The processing unit in the first processing unit set may also be referred to as a little processor core, and is referred to as a "little core" for short. The processing unit in the second processing unit set may also be referred to as a big processor core, and is referred to as a "big core" for short.

Because costs of the little core with a low computing capability are far lower than that of the big core, the little core is disposed in the computing device, and some data processing requests (for example, data processing requests with a large concurrency amount and a low computing amount) that are suitable for being processed by the little core are scheduled to the little core for processing. In this way, the costs are reduced while the data processing requests can be efficiently responded to, and the big core in the computing device can be more properly used in a complex task.

In a possible implementation of the first aspect, power consumption of a processing unit in the first processing unit set is lower than a computing capability of a processing unit included in a second processing unit set in the at least two processing unit sets.

Scheduling the data processing request to the processing unit in the first processing unit set with low power consumption can reduce power consumption of processing the data processing request by the computing device.

In a possible implementation of the first aspect, the data processing request is sent by a network interface card in the computing device to the scheduling apparatus. The network interface card in the computing device may receive a data processing request sent by a requesting device that performs remote communication with the computing device, and the network interface card sends the data processing request to the scheduling apparatus, and the scheduling apparatus schedules the data processing request, so that in an inter-device data processing scenario, the processing unit does not need to run the poll (poll) thread to obtain the data processing request from the network interface card.

In a possible implementation of the first aspect, the data processing request is from a service run on the computing device. A data processing request delivered by an upper-layer service run on the computing device is delivered to the scheduling apparatus, so that the scheduling apparatus determines the target processing unit, and then the target processing unit performs data processing, so that in an intra-device data processing scenario, the resource of the processing unit in the computing device may also be more properly used for data processing.

In a possible implementation of the first aspect, the data processing request is a data query request of a relational database, or the data processing request is a data retrieval and accumulation request of an artificial intelligence AI model training service.

Although the data query request of the relational database (for example, a B+ tree) and the data retrieval and accumulation request of the artificial intelligence AI model training service require a small computing amount, complex small steps need to be performed. For example, to search for a leaf node, a root node of a tree needs to be searched first, then an intermediate node is accessed through a pointer of the root node, and finally the leaf node is accessed through a pointer of the intermediate node, to obtain data in the leaf node or a pointer pointing to the data. The data processing request is scheduled to a dedicated processing unit (for example, a processing unit with a low computing capability and power consumption) for execution, so that power consumption of the computing device can be reduced while execution efficiency is ensured, and more resources are reserved for processing units of other types in the computing device to process the complex task.

In a possible implementation of the first aspect, the scheduling apparatus determines the first processing unit set from the at least two processing unit sets based on the function identifier, and determines the target processing unit in the first processing unit set, which is specifically includes: The scheduling apparatus determines the first processing unit set from the at least two processing unit sets based on the function identifier and a scheduling rule, and determines the target processing unit in the first processing unit set. The scheduling rule may be preset by an administrator based on a service requirement. The target processing unit set is determined based on the scheduling rule and the function identifier, so that the data processing request is scheduled to a proper target unit.

In a possible implementation of the first aspect, the scheduling rule includes a request forwarding policy. The request forwarding policy indicates that a function identifier carried in the request corresponds to the first processing unit set, or the request forwarding policy indicates that a function identifier carried in the request corresponds to the first processing unit set and another processing unit set. The another processing unit set is a subset of the at least two processing unit sets. The target processing unit set can be obtained more quickly by using the request forwarding policy. The request forwarding policy may alternatively be implemented in a manner of a request forwarding table. In this case, the processing unit set corresponding to the function identifier can be obtained by querying the table. In addition, in the request forwarding policy, the function identifier corresponds to the processing unit set, so that the data processing request does not need to carry an additional parameter for determining the target processing unit set.

In a possible implementation of the first aspect, the scheduling rule further includes a priority policy. When the function identifier in the data processing request corresponds to the first processing unit set and the another processing unit set, the scheduling apparatus selects the first processing unit set from the corresponding processing unit sets based on the priority policy. The request forwarding policy and the priority policy are used together, so that the scheduling of the scheduling apparatus is more flexible.

In a possible implementation of the first aspect, the scheduling rule further includes a load balancing policy. The determining a target processing unit in the first processing unit set includes: obtaining the target processing unit from the first processing unit set based on the load balancing policy. After the first processing unit set is determined, the target processing unit in the first processing unit set is further determined based on the load balancing policy, to enable the computing device to implement load balancing as a whole. The load balancing policy may be a minimum concurrency quantity policy, a minimum response time policy, a poll policy, a random policy, or the like.

In a possible implementation of the first aspect, the computing device further includes a management unit. Before the scheduling apparatus receives the data processing request, the method further includes: The management unit initializes the computing device. The management unit initializes the computing device in advance, to enable the computing device to process the data processing request based on an initialization setting.

In a possible implementation of the first aspect, a phase in which the management unit initializes the computing device mainly includes: The management unit configures the scheduling rule for the scheduling apparatus. The scheduling rules may be flexibly configured based on different services, to enable the computing device to process a data processing request of a service more effectively based on a feature of the service.

In a possible implementation of the first aspect, that the management unit initializes the computing device further includes: allocating memory space for a functional function corresponding to the function that needs to be called for the data processing request; and storing the functional function in the memory space. The memory space is pre-allocated for the functional function, to enable the functional function to be stored in the memory space, so that a functional function call speed of the target processing unit in a data processing phase can be accelerated.

There may be two manners of storing the functional function in the memory space. One manner is that when the functional function is stored in a storage device (for example, a hard disk drive) of the computing device, the management unit loads the functional function in the storage device to the memory space. The other manner is that when the functional function is from the requesting device, the network interface card of the computing device obtains the functional function sent by the requesting device, and sends the functional function to the management unit, and the management unit stores the functional function in the memory space.

In a possible implementation of the first aspect, after the scheduling apparatus determines the first processing unit set from the at least two processing unit sets based on the function identifier, and determines the target processing unit in the first processing unit set, the method further includes: The scheduling apparatus reports a notification to the target processing unit; and the target processing unit reads a parameter of the data processing request from the memory of the computing device based on the reported notification, to process the data processing request. In this way, the target processing unit may process the data processing request in time based on the notification, to accelerate a response speed of the target processing unit to the data processing request.

In a possible implementation of the first aspect, that the target processing unit processes the data processing request includes: The target processing unit calls, based on the function identifier, the functional function corresponding to the function; and the target processing unit processes the data processing request based on the parameter of the data processing request and the functional function.

According to a second aspect, this application provides a computing device. The computing device includes a scheduling apparatus and at least two processing unit sets. Each processing unit set includes at least one processing unit, and the scheduling apparatus in the computing device is communicatively connected to processing units in the at least two processing unit sets. The scheduling apparatus in the computing device is configured to receive a data processing request. The data processing request includes a function identifier, and the function identifier indicates a function that needs to be called to process the data processing request. The scheduling apparatus is further configured to determine a first processing unit set from the at least two processing unit sets based on the function identifier, and determine a target processing unit in the first processing unit set. The target processing unit is configured to process the data processing request, to obtain a data processing result.

In a possible implementation of the second aspect, a computing capability of a processing unit in the first processing unit set is lower than a computing capability of a processing unit included in a second processing unit set in the at least two processing unit sets.

In a possible implementation of the second aspect, power consumption of a processing unit in the first processing unit set is lower than power consumption of a processing unit included in a second processing unit set in the at least two processing unit sets.

In a possible implementation of the second aspect, the scheduling apparatus and the first processing unit set are deployed on a same die (DIE), or the scheduling apparatus and the second processing unit set in the at least two processing unit sets are deployed on a same die (DIE). The scheduling apparatus and the first or second processing unit set are deployed on the same die, so that a distance between the scheduling apparatus and the processing unit in the processing unit set is short and a communication path is short. Communication that is more efficient can be implemented between the scheduling apparatus and the processing units, and the data processing request can be scheduled more quickly.

In a possible implementation of the second aspect, the scheduling apparatus is a pluggable chip on the computing device.

In a possible implementation of the second aspect, the data processing request is sent by a network interface card in the computing device to the scheduling apparatus, or the data processing request is from a service run on the computing device.

In a possible implementation of the second aspect, the data processing request is a data query request of a relational database, or the data processing request is a data retrieval and accumulation request of an artificial intelligence AI model training service.

In a possible implementation of the second aspect, the computing device further includes a management unit, and the management unit is located in the at least two processing unit sets. The management unit is configured to initialize the computing device.

In a possible implementation of the second aspect, the management unit is specifically configured to configure a scheduling rule for the scheduling apparatus.

In a possible implementation of the second aspect, the management unit is specifically configured to allocate memory space for a functional function corresponding to the function that needs to be called for the data processing request, and store the functional function in the memory space.

In a possible implementation of the second aspect, the scheduling apparatus is specifically configured to determine the first processing unit set from the at least two processing unit sets based on the function identifier and the scheduling rule, and determine the target processing unit in the first processing unit set. The first processing unit set is the determined target processing unit set.

In a possible implementation of the second aspect, the scheduling rule includes a request forwarding policy. The request forwarding policy indicates that the function identifier corresponds to the first processing unit set. Alternatively, the request forwarding policy indicates that the function identifier corresponds to the first processing unit set and another processing unit set. The another processing unit set is a subset of the at least two processing unit sets.

In a possible implementation of the second aspect, the scheduling rule further includes a priority policy. When the function identifier in the data processing request corresponds to the first processing unit set and the another processing unit set, the scheduling apparatus is specifically configured to select the first processing unit set from the corresponding processing unit sets based on the priority policy.

In a possible implementation of the second aspect, the scheduling rule further includes a load balancing policy. The scheduling apparatus is specifically configured to determine the target processing unit from the first processing unit set based on the load balancing policy.

According to a third aspect, this application further provides a scheduling apparatus. The scheduling apparatus includes a communication interface and a processing component. The communication interface is coupled to the processing component, and the scheduling apparatus is further communicatively connected to processing units in at least two processing unit sets through the communication interface. The communication interface in the scheduling apparatus is configured to receive a data processing request. The data processing request includes a function identifier, and the function identifier indicates a function that needs to be called to process the data processing request. The processing component is configured to determine a first processing unit set from the at least two processing unit sets based on the function identifier, and determine a target processing unit in the first processing unit set. The target processing unit is configured to process the data processing request.

In a possible implementation of the third aspect, the scheduling apparatus is deployed on a computing device. The data processing request is sent by a network interface card in the computing device to the scheduling apparatus, or the data processing request is from a service run on the computing device.

In a possible implementation of the third aspect, the data processing request is a data query request of a relational database, or the data processing request is a data retrieval and accumulation request of an artificial intelligence AI model training service.

In a possible implementation of the third aspect, the processing component is specifically configured to determine the first processing unit set from the at least two processing unit sets based on the function identifier and a scheduling rule, and determine the target processing unit in the first processing unit set.

In a possible implementation of the third aspect, the scheduling rule includes a request forwarding policy. The request forwarding policy indicates that the function identifier corresponds to the first processing unit set. Alternatively, the request forwarding policy indicates that the function identifier corresponds to the first processing unit set and another processing unit set. The another processing unit set is a processing unit set of the at least two processing unit sets.

In a possible implementation of the third aspect, the scheduling rule further includes a priority policy. When the function identifier in the data processing request corresponds to the first processing unit set and the another processing unit set, the processing component is specifically configured to select the first processing unit set from the corresponding processing unit sets based on the priority policy.

In a possible implementation of the third aspect, the scheduling rule further includes a load balancing policy. The processing component is specifically configured to determine the target processing unit from the first processing unit set based on the load balancing policy.

According to a fourth aspect, this application further provides a scheduling method. The scheduling method is implemented by a scheduling apparatus, and the scheduling apparatus is communicatively connected to processing units in at least two processing unit sets through a communication interface. The method includes: receiving a data processing request, where the data processing request includes a function identifier, and the function identifier indicates a function that needs to be called to process the data processing request; and determining a first processing unit set from the at least two processing unit sets based on the function identifier, and determining a target processing unit in the first processing unit set. The target processing unit is configured to process the data processing request. There may be one or more target processing units.

In a possible implementation of the fourth aspect, the scheduling apparatus is deployed on a computing device, and the data processing request is sent by a network interface card in the computing device to the scheduling apparatus, or the data processing request is from a service run on the computing device.

In a possible implementation of the fourth aspect, the data processing request is a data query request of a relational database, or the data processing request is a data retrieval and accumulation request of an artificial intelligence AI model training service.

In a possible implementation of the fourth aspect, the determining a first processing unit set from the at least two processing unit sets based on the function identifier, and determining a target processing unit in the first processing unit set mainly includes: determining the first processing unit set from the at least two processing unit sets based on the function identifier and a scheduling rule, and determining the target processing unit in the first processing unit set.

In a possible implementation of the fourth aspect, the scheduling rule includes a request forwarding policy. The request forwarding policy indicates that the function identifier corresponds to the first processing unit set, or the request forwarding policy indicates that the function identifier corresponds to the first processing unit set and another processing unit set. The another processing unit set is a subset of the at least two processing unit sets.

In a possible implementation of the fourth aspect, the scheduling rule further includes a priority policy. When the function identifier in the data processing request corresponds to the first processing unit set and the another processing unit set, in the method, the first processing unit set is specifically selected from the corresponding processing unit sets based on the priority policy.

In a possible implementation of the fourth aspect, the scheduling rule further includes a load balancing policy. The method specifically determines the target processing unit from the first processing unit set based on the load balancing policy.

Technical effects obtained by the technical features in the second aspect, the third aspect, and the fourth aspect or the possible implementations of the aspects are similar to technical effects obtained by the corresponding technical features in the first aspect or the possible implementations of the first aspect. For details, refer to the description of the first aspect. Details are not described herein again.

According to a fifth aspect, this application further provides a data processing apparatus. The data processing apparatus includes at least one processing unit set and the scheduling apparatus according to the third aspect or any one of the possible implementations of the third aspect. The data processing apparatus may be a chip integrated in a computing device, or may be a component that can be flexibly plugged and unplugged in a computing device. The scheduling apparatus in the data processing apparatus communicates with processing units in the at least one processing unit set on chip, so that power consumption can be reduced and communication efficiency can be improved during communication.

### BRIEF DESCRIPTION OF DRAWINGS

FIG. 1 is a schematic diagram of a structure of a data processing system according to an embodiment of this application;
FIG. 2 is a schematic diagram of an application scenario of inter-device data processing according to an embodiment of this application;
FIG. 3 is a schematic diagram of an application scenario of intra-device data processing according to an embodiment of this application;
FIG. 4 is a schematic diagram of a structure of a computing device 100 according to an embodiment of this application;
FIG. 5 is a schematic flowchart of an initialization procedure in an inter-device data processing scenario according to an embodiment of this application;
FIG. 6 is a schematic diagram of a request forwarding table according to an embodiment of this application;
FIG. 7 is a schematic flowchart of data processing in an inter-device data processing scenario according to an embodiment of this application;
FIG. 8 is a schematic diagram of an initialization procedure in an intra-device data processing scenario according to an embodiment of this application;
FIG. 9 is a schematic flowchart of data processing in an intra-device data processing scenario according to an embodiment of this application;
FIG. 10 is a schematic diagram of an internal structure of a scheduling apparatus 104 according to an embodiment of this application; and
FIG. 11 is a schematic diagram of a structure of a data processing apparatus 300 according to an embodiment of this application.

### DESCRIPTION OF EMBODIMENTS

The following describes in detail an application scenario and an example implementation of this application with reference to the accompanying drawings.

In the field of computers, service processing cannot be separated from data processing. Based on different service types and service scales, a plurality of service processing scenarios, that is, a plurality of data processing scenarios, occur. For example, in some scenarios, a service is run on an independent device, and a computing resource of the device supports a data processing request required by the service. This application scenario is also referred to as an intra-device data processing scenario. For another example, for some large-scale services, the service need to be run by a plurality of devices together, and the devices need to interact with each other to complete service processing. In this application scenario, a device may need to process a data processing request from a remote requesting device that communicates with the device, which is also referred to as an inter-device data processing scenario.

The following specifically describes the foregoing two data processing scenarios.

### 1. Inter-device data processing scenario

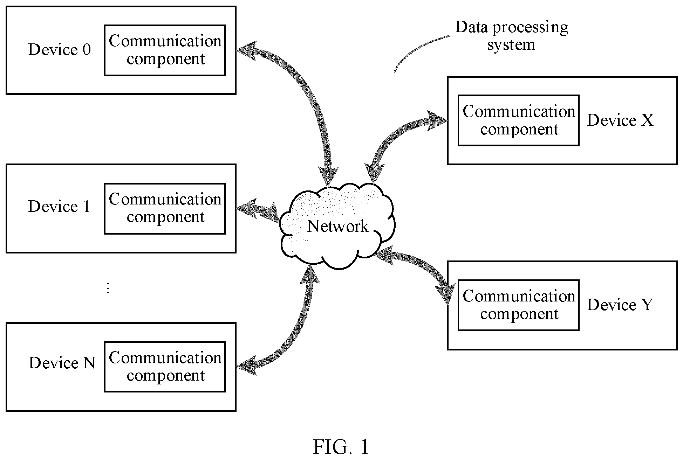

For a large-scale service, there is usually a scenario in which a plurality of devices interact with each other to implement data processing, for example, data query, insertion, deletion, and modification in a distributed database. As shown in FIG. 1, a plurality of devices (for example, a device 0, a device 1, a device N, a device X, and a device Y in FIG. 1) may jointly form a data processing system. The devices in the data processing system may communicate with each other, for example, may be connected via an external network, a local area network, or a cable. In an inter-device data processing scenario, one device may send a data processing request (in some descriptions of embodiments of this application, a "data processing request" is also referred to as a "request") to another device via a communication component. After completing data processing, the another device returns a data processing response via the communication component. The communication component may be a network interface card. In this scenario, the device that sends the request may be referred to as a client device, a requesting device, or a transmit end device, and an end that receives the request may be referred to as a server device, a computing device, or a receive end device. It should be understood that some devices may be configured to send a request and may respond to a request sent by another device, and some devices may be configured to send only a request or respond only to a request.

For the inter-device data processing scenario, a remote direct memory access (remote direct memory access, RDMA) technology or a remote procedure call (remote procedure call, RPC) technology is usually used for inter-device data processing.

The RDMA technology is a technology that is generated to resolve an internal data processing delay of a device in network transmission. In the RDMA technology, data in a user application is directly transferred to a storage area of the device, and the data is quickly transferred from one device to a storage device of another device via a network. This eliminates a plurality of data replication operations in the device during a transmission process, and does not require intervention of operating systems of the two devices, to reduce load of a central processing unit (central processing unit, CPU) in the device.

The RDMA technology has the semantics of RDMA read (read) and RDMA write (write), and an inter-device data exchange may be performed by initiating an RDMA read request or an RDMA write request. However, for processing of some data, for example, access to key-value (Key-Value) pair data in a relational database that is in a storage form such as a Hash (Hash) table, a linked list, or a b+ tree, to search for a leaf node, a root node of a tree needs to be searched first, then an intermediate node is accessed through a pointer of the root node, and finally the leaf node is accessed through a pointer of the intermediate node, to obtain data in the leaf node or a pointer pointing to the data. To use RDMA semantics, the requesting device needs to initiate a plurality of times of node access and intermediate data processing requests, to obtain a final result. In other words, in the inter-device data processing scenario, if an RDMA read/write request is used to perform data query, a plurality of times of RDMA access may be required to complete one data processing operation, and a response delay is high.

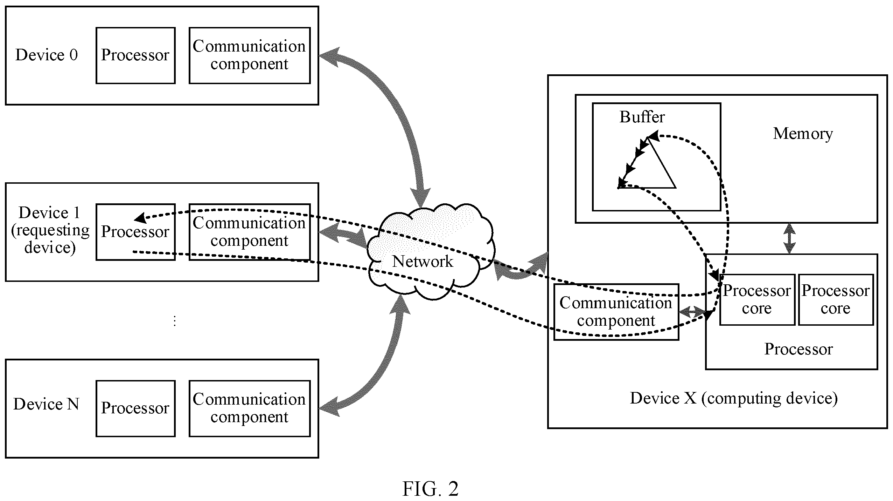

The RPC technology is a bilateral remote program call technology. The requesting device initiates the data processing request to the computing device, and calls a processor of the computing device to implement data processing. The processor of the computing device usually includes one or more processor cores that have a same implementation process and a same processing capability, and resources of the processor cores are used based on scheduling of an operating system. When performing data processing, the computing device obtains the request by setting a plurality of poll threads run on the processor core, and then calls an execution thread run on the processor core to execute the request. For example, in FIG. 2, a device 1 is a requesting device that initiates a data processing request, and a device X is a computing device that processes the data processing request. As shown in FIG. 2, a data processing request generated by a processor in the device 1 is sent to a communication component of the device X via the communication component and a network. The communication component writes the data processing request to a memory. A poll thread run on a processor core of a processor of the device X obtains the data processing request from the memory in a polling manner. An execution thread on the processor core performs processing based on the data processing request. For example, when the data processing request is a data query request of a leaf node of a b+ tree, the execution thread searches for data layer by layer from a buffer of the memory based on a structure of the b+ tree, and finally returns a query result to the device 1 via the communication component.

In the current RPC solution, when some data is processed, a plurality of times of network access caused by directly calling RDMA are avoided. However, the poll thread and the execution thread need to be run on the processor core in the computing device, to obtain, schedule, and process the data processing request. Consequently, it is difficult to balance a quantity of poll threads and a quantity of execution threads. When the quantity of poll threads is small, the poll thread may easily become a concurrency bottleneck for some small-granularity requests with a small computing amount but a large concurrency amount. For example, the poll thread cannot obtain the data processing request in time. If the quantity of poll threads is increased, resources of the processor core are excessively occupied, and an execution thread that actually performs data processing requires fewer resources, reducing a capability of the computing device in processing an RPC request. That is, in the current RPC solution, when the computing device that receives the data processing request from the requesting device performs data processing, the processor core in the computing device is required to implement obtaining, scheduling, and processing of the request from the network interface card to the processor, and resources of the processor core in the computing device are difficult to coordinate. In this case, a performance bottleneck easily occurs when the computing device performs data processing, affecting stability and efficiency of data processing.

Therefore, it can be learned from the foregoing that, in an application scenario of inter-device data processing, a solution is urgently needed to enable the computing device to perform data processing more efficiently.

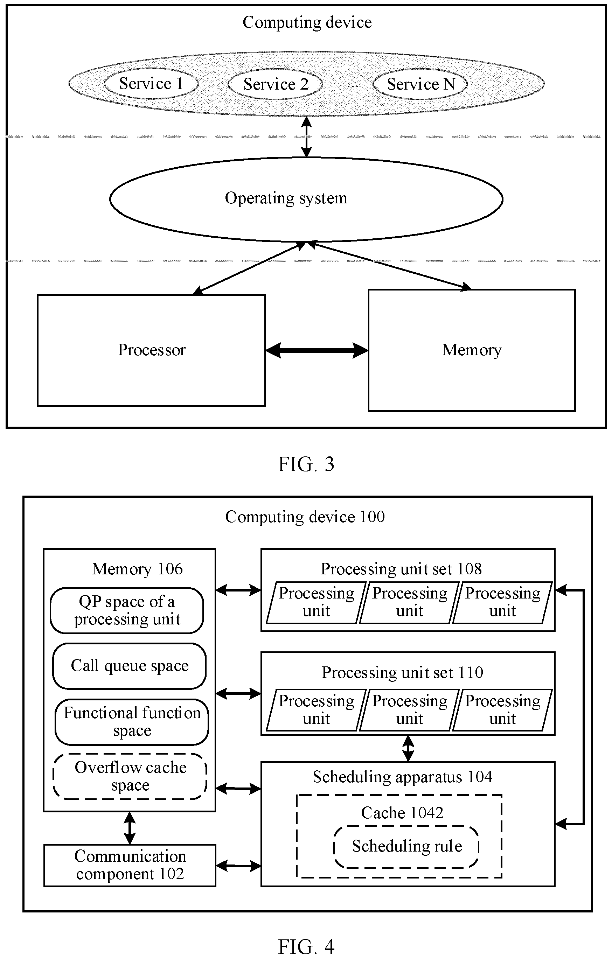

In another application scenario, that is, the intra-device data processing scenario. As shown in FIG. 3, a computing device includes a processor and a memory, and the processor may include at least one general-purpose processor core. An operating system and a plurality of upper-layer services are further run on hardware of the computing device. When the upper-layer service run on the computing device needs to perform data processing, the service delivers a data processing request to an operating system run on the processor, and the operating system schedules, based on resources of each processor core in a bottom-layer processor, the data processing request to a processor core that currently has an idle resource, and the processor core runs a corresponding execution thread to complete data processing. In this application scenario, actually, the processor in the device completes a plurality of types of tasks such as obtaining, scheduling, and processing of the data processing request. In this case, a resource that is actually used to process the data processing request and that is in the processor in the device is occupied by tasks such as obtaining and scheduling of the data processing request.

Further, in the foregoing two application scenarios, the processors in the computing device are general-purpose processors. When the plurality of upper-layer services generate different data processing requests, or a remote requesting device requests a plurality of different data processing requests, the general-purpose processor in the computing device is required to run various threads for data processing, and the threads contend for resources. For example, when the general-purpose processor core is required to concurrently process a large-granularity request with a large computing amount and a small-granularity request with a small computing amount but a large concurrency amount, a performance bottleneck easily occurs on the processor. For example, a delay of responding to some data processing requests by the device is excessively long, or a response failure occurs when the device cannot support a quantity of concurrent data processing requests. Therefore, in the foregoing two application scenarios, a solution is also urgently needed to enable the computing device to perform data processing more efficiently.

Based on this, this application aims to improve an internal hardware structure of the computing device, so that the computing device can implement more proper resource utilization and more efficient data processing in the foregoing two scenarios.

FIG. 4 is a schematic diagram of an internal structure of a computing device 100 according to an embodiment of this application. As shown in FIG. 4, the computing device 100 includes a communication component 102, a scheduling apparatus 104, a memory 106, a processing unit set 108 (which may also be referred to as a first processing unit set), and a processing unit set 110 (which may also be referred to as a second processing unit set). It should be understood that the structure described in FIG. 4 is merely an example, and does not limit an actual quantity or an actual layout of components/apparatuses or units. For example, in some embodiments, the computing device may further include more processing unit sets, and quantities of processing units in the processing unit sets may be the same or different. Alternatively, processing units in different processing unit sets may be homogeneous or heterogeneous. In other words, specifications and design architectures of processing units in different processing unit sets may be the same or different.

The communication component 102 is configured to support external communication of the computing device 100 and communication with the scheduling apparatus 104 inside the computing device 100. For example, the communication component 102 may be a network interface controller (network interface controller, NIC), also referred to as a network interface card.

In an inter-device data processing scenario, the communication component 102 may receive a data processing request sent by a requesting device, and send the data processing request to the scheduling apparatus 104 by directly calling the scheduling apparatus 104. A manner of implementing a direct call may be notifying the scheduling apparatus 104 by using a door bell (door bell, DB) register, or notifying the scheduling apparatus 104 through a handshake signal interface, so that the scheduling apparatus 104 obtains the data processing request.

The scheduling apparatus 104 supports the direct call of the communication component 102, and obtains the data processing request that is sent by the communication component 102 and that is from a remote requesting device. The scheduling apparatus 104 is also configured to schedule the request based on a function identifier included in the data processing request, and is configured to interact with a processing unit in the processing unit set 108 or a processing unit in the processing unit set 110 (also referred to as calling a processing unit in the processing unit set 108 or a processing unit in the processing unit set 110), and schedule the request to the processing unit in the processing unit set 108 or the processing unit in the processing unit set 110.

In an intra-device data processing scenario, the data processing request received by the scheduling apparatus 104 may be further from an upper-layer service run on the computing device 100. Specifically, the scheduling apparatus 104 is configured to receive a data processing request transmitted from an intra-device data transmission link, for example, a peripheral component interconnect express (peripheral component interconnect express, PCIe) physical link or a Huawei cache coherence system (Huawei cache coherence system, HCCS) physical link.

In this application, the scheduling apparatus 104 may be implemented in a plurality of manners. In some embodiments, the scheduling apparatus 104 may be a hardware circuit apparatus that is integrated on a mainboard of the computing device 100 and that is close to any one or more processing unit sets. For example, the scheduling apparatus 104 and the processing unit set 108 may be designed on a same die (DIE), or the scheduling apparatus 104 and the processing unit set 110 may be designed on a same die, or the scheduling apparatus 104, the processing unit set 108, and the processing unit set 110 may be jointly designed on a same die. Alternatively, the scheduling apparatus 104 may be inserted into the mainboard of the computing device 100 as an independent component, that is, the scheduling apparatus 104 is a flexible pluggable hardware card, and the card may be a PCIe card.

Alternatively, the scheduling apparatus 104 may be a processing unit (for example, a processor core) that is homogeneous to any processing unit in the processing unit set 108 or the processing unit set 110. The processing unit completes request scheduling based on a customized logic and an initialized configuration. The scheduling apparatus 104 may be further integrated into the communication component 102 or another PCIe device included in the computing device 100.

In some embodiments, the scheduling apparatus 104 may include a communication interface 1044 and a processing component 1046 (which are not shown in FIG. 4), and the communication interface 1044 is coupled to the processing component 1046. The communication interface 1044 is used for communication between the scheduling apparatus 104 and another apparatus or component. The communication interface 1044 may be a PCIe interface or a serial peripheral interface (serial peripheral interface, SPI). This is not specifically limited in this application. The scheduling apparatus 104 may further be communicatively connected to the communication component 102 and the processing units in the processing unit set 108 and the processing unit set 110 through the communication interface 1044.

The processing component 1046 is configured to schedule the data processing request. A specific implementation of the processing component 1046 may be a CPU, a CPU core, or a graphics processing unit (graphics processing unit, GPU). The processing component 1046 may alternatively be implemented by the CPU core or a combination of the GPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

Optionally, the scheduling apparatus 104 may further include a cache 1042, where the cache 1042 is configured to cache the data processing request. As shown in FIG. 4, the scheduling apparatus 104 is further configured to prestore a scheduling rule, where the scheduling rule may include a request forwarding policy and a scheduling policy. The scheduling apparatus 104 schedules the data processing request based on the request forwarding policy and the scheduling policy.

The memory 106 in FIG. 4 is configured to store various parameters, control instructions, functional functions, and the like that are required by the computing device 100 to perform data processing. The communication component 102, the scheduling apparatus 104, and the processing units in the processing unit sets 108 and 110 may directly access the memory 106, and are configured to store, read, and call the parameter or the functional function, and call the control instruction. In an initialization phase of the computing device 100, the memory 106 may be divided into a plurality of types of space, and each type of memory space is used to store different types of content. For example, the memory 106 may be divided into: queue pair (queue pair, QP) space, call queue space, and functional function space that are required by each processing unit to perform data processing. Optionally, the memory 106 may further include cache overflow space of the scheduling apparatus 104. The communication component 102, the scheduling apparatus 104, and the processing units in the processing unit sets 108 and 110 may store or read corresponding content in different memory space as required.

The memory 106 may be a volatile memory (volatile memory), for example, a random access memory (random access memory, RAM).

The processing unit set 108 and the processing unit set 110 each include at least one processing unit. The processing units in the processing unit set 108 and the processing unit set 110 may be processing units with different processing performance. For example, compared with the processing unit in the processing unit set 108, the processing unit in the processing unit set 110 has a higher computing capability and higher power consumption. Each processing unit may be an independent processor or an independent processor core, for example, may be an arm, X86, or a Riscv core.

Each processing unit is mainly configured to run one or more threads. The thread indicates that each thread is a basic unit that can be run independently, and is also a basic unit that can be independently scheduled and assigned. Different threads are used to execute different tasks, for example, a management task and a data processing task. A plurality of threads may be concurrently executed in one processing unit or processing unit set. When any processing unit in the processing unit set 108 or the processing unit set 110 is called by the scheduling apparatus 104, the processing unit creates a new thread to perform corresponding data processing, and returns a data processing response.

In the initialization phase of the computing device 100, any processing unit in the processing unit set 108 or the processing unit set 110 may further run a thread used to perform work such as memory space allocation initialization and management configuration. The thread is also referred to as a management thread, and a processing unit that executes the management thread is referred to as a management unit.

The management unit is not only configured to pre-allocate memory space of the computing device 100, but also configured to receive a functional function registration request that is delivered by the local computing device 100 or sent by any remote requesting device, and prestore, in allocated functional function space in the memory 106, code of a functional function corresponding to the request, that is, complete registration of the functional function.

In this application, the functional function (Function) is a logical function for performing data processing. Each functional function represents a function for performing data processing, and the functional function includes a set of code. When the function for performing data processing is called, that is, the functional function is called, code of the functional function is run, and a data processing operation may be completed after the code is run. For example, a functional function getkey() represents a data query function in a B+ tree. After executing the function, the processing unit may query a B+ tree database to obtain a result. Each functional function is further corresponding to a function identifier. A function identifier included in a data processing request may indicate a function that needs to be called to process the data processing request. A corresponding functional function may be called using the function identifier. It should be noted that the function identifier in this application may be further used in the request forwarding policy to indicate one or more processing unit sets that can be used to process a request carrying the function identifier. Therefore, when scheduling a target processing unit based on the data processing request, the scheduling apparatus 104 may determine a target processing unit set and the target processing unit based on the function identifier included in the request and a pre-configured request forwarding policy. An identifier specifically indicating the processing unit set does not need to be additionally added to the request, to save communication bandwidth between devices.

It should be understood that, in some embodiments, the registration of the functional function may alternatively be implemented by the foregoing scheduling apparatus 104, that is, the scheduling apparatus 104 receives the foregoing functional function registration request, to correspondingly store the code of the functional function in a memory corresponding to the processing unit set.

The management unit further initializes the scheduling apparatus 104 in advance. The initialization may include: storing information about the processing units in the processing unit set 108 and the processing unit set 110 in a cache and/or a memory of the scheduling apparatus 104; and configuring, in the scheduling apparatus 104, a scheduling rule required by the scheduling apparatus 104 to perform scheduling.

It should be understood that, in some other embodiments, the function provided by the management thread that is run by the management unit of the computing device 100 may alternatively be implemented by a management device outside the computing device 100. Details are not described. In this case, the computing device 100 does not need to run the management thread on its own to perform the foregoing management and configuration.

In the computing device 100 described in FIG. 4, the scheduling apparatus 104 is introduced and different processing unit sets are set, so that the scheduling apparatus 104 may schedule, to a processing unit in a proper processing unit set based on a pre-configuration, a data processing request from an external requesting device or a data processing request delivered by a service in the device. Due to introduction of the scheduling apparatus 104, in the inter-device data processing scenario, a case that each processing unit of the computing device is required to run the poll thread to poll each queue corresponding to the communication component is avoided, to enable the processing unit to support more data processing threads. In the intra-device data processing scenario, by using the scheduling apparatus 104, occupation of a processing resource of a processing unit in the device is avoided, to enable the processing unit to support more data processing tasks.

The following uses an inter-device data processing scenario as an example to specifically describe specific steps in which the computing device 100 processes a data processing request from a remote requesting device 200.

The computing device 100 needs to be initialized before being configured to process the data processing request. An example in which a management unit 1081 of the computing device 100 performs an initialization procedure is used below to specifically describe various steps of initialization.

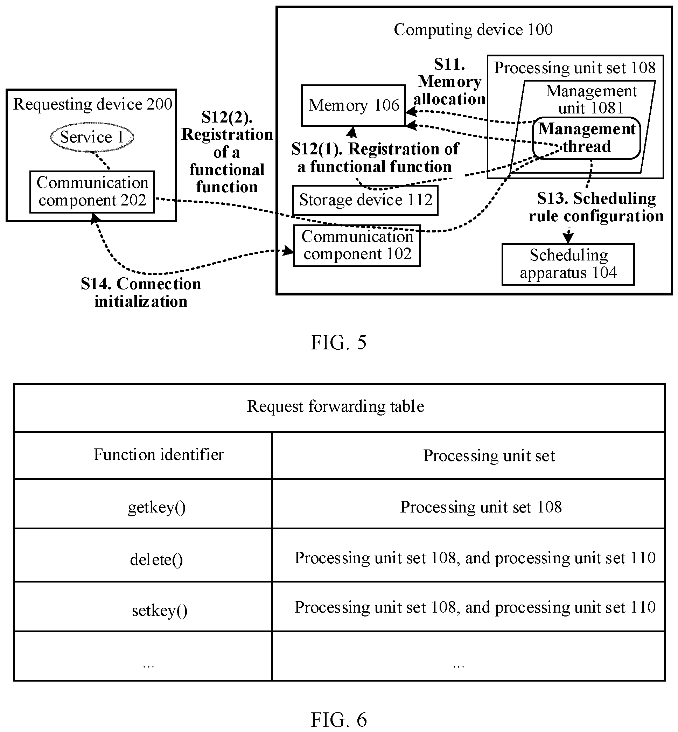

As shown in FIG. 5, a requesting device 200 and a computing device 100 may be in a communication connection via any communication manner such as a wide area network or a local area network. The steps of initializing the computing device 100 include the following steps.

S11. A management unit 1081 allocates a memory 106.

Specifically, the computing device 100 may perform, based on a memory allocation operation triggered by an administrator on a management interface or a default memory allocation instruction set by the computing device, memory allocation in advance by using a management thread run on the management unit 1081.

Memory space allocated by the management unit 1081 may include:
(1) Queue pair (queue pair, QP) space required by each processing unit in the computing device 100 for performing data processing: The allocated QP space is used to store a data processing result, and the QP space includes at least one QP. In a data processing phase, when the processing unit completes a data processing operation, the processing unit stores the data processing result in a send queue (send queue, SQ) of the QP, and indicates the communication component 102 to obtain the data processing result.
(2) Call queue space: Specifically, the call queue space includes queues that need to be consumed when the communication component 102 calls the scheduling apparatus 104 and the scheduling apparatus 104 calls the processing unit in the processing unit set.
   A purpose of the allocated call queue space in the data processing phase is as follows: After the communication component 102 receives the data processing request sent by the requesting device 200, the communication component 102 needs to first store all parameters corresponding to the data processing request in the call queue in the memory. When the communication component 102 calls the scheduling apparatus 104 by ringing a door bell, the communication component 102 generates a door bell request based on the data processing request. The door bell request includes some parameters, for example, the function identifier, of the data processing request. Alternatively, the door bell request may include a pointer that points to a queue of some parameters in the data processing request stored in the memory. The communication component 102 rings the door bell of a door bell register in the scheduling apparatus 104. The scheduling apparatus 104 first determines, based on the parameter in the door bell request and a scheduling rule, a processing unit set for processing the request, and further determines, from the determined processing unit set, one or more processing units for processing the request. For ease of description, the determined processing unit set is referred to as a target processing unit set, and the determined processing unit is referred to as a target processing unit. The scheduling apparatus 104 writes the scheduling parameter into a queue in the call queue space, and reports an interrupt to the target processing unit, to enable the target processing unit to read the queue. Alternatively, the scheduling apparatus 104 does not report the interrupt, and the target processing unit polls the queue to obtain the scheduling parameter. After obtaining the scheduling parameter, the target processing unit may start to perform data processing.
(3) Memory space required for registration of a functional function, that is, functional function space: The functional function space is used to store a functional function that needs to be called when the processing unit performs a data processing operation, and different data processing operations correspond to different functional functions. In some embodiments, the allocated functional function space in the memory may be accessed by any processing unit in the computing device 100. In some other embodiments, when the functional function space is allocated, the functional function space may alternatively be allocated to each processing unit set in the computing device 100. That is, each processing unit set in the computing device 100 may include functional function space corresponding to each processing unit set. For example, in the example shown in FIG. 4, when allocating the memory space in advance, the management unit allocates functional function space corresponding to the processing unit set 108 and functional function space corresponding to the processing unit set 110.
(4) Optionally, during memory space allocation, cache overflow space of the scheduling apparatus 104 may be further allocated. When the scheduling apparatus 104 receives a large quantity of data processing requests, and a cache in the scheduling apparatus 104 is fully occupied, the cache overflow space is used to store the parameter of the data processing request received by the scheduling apparatus 104.
(5) Optionally, during memory space allocation, scheduling rule storage space may be further allocated. When the scheduling rule configured for the scheduling apparatus 104 is complex, the required storage space is large, and the cache of the scheduling apparatus 104 is limited, the scheduling rule may be stored in corresponding space in the memory, and the scheduling apparatus 104 performs request scheduling by accessing the memory to read the scheduling rule.

It should be understood that an allocation amount of the foregoing various types of memory space may be manually set by the administrator when memory allocation is started, or may be allocated based on a preset default allocation amount.

It should be understood that when allocating the memory space, in addition to the foregoing allocation, the management unit may further allocate some other memory space based on specific implementation. This is not limited in this application.

S12. Perform registration of the functional function.

The registration of the functional function is to load and store, in advance to the functional function space in the computing device 100, the functional function that needs to be called in the data processing phase, so that the computing device 100 can directly read a corresponding functional function from the memory when performing data processing. The registration of the functional function may be performed by the management unit 1081.

Specifically, the registration of the functional function may be performed in two manners: S12(1) and S12(2), which are respectively described below.

S12(1). When another storage device 112 (for example, a hard disk drive) in the computing device 100 stores the functional function corresponding to the data processing request to be sent by the requesting device 200, the registration of the functional function is that the management unit loads the functional function from the storage device 112 to the memory 106 in advance, and specifically, loads the functional function to the allocated functional function space in the memory 106 in S11.

S 12(2). When the storage device 112 of the computing device 100 does not have the functional function corresponding to the data processing request to be sent by the requesting device 200, the registration of the functional function is that a service 1 run by the requesting device 200 delivers a functional function registration request to a communication component 202, where the functional function registration request carries the functional function that needs to be stored in the computing device 100. The communication component 202 in the requesting device 200 communicates with the communication component 102 in the computing device 100 in any communication means, for example, an RDMA protocol or a Socket protocol, to send the functional function registration request to the communication component 102. Then, the communication component 102 sends the function registration request to a management thread in the management unit 1081, and the management thread stores the functional function in the allocated functional function space in the memory 106 in S11. Generally, functional functions that are registered in the manner of S12(2) are data processing operations customized and developed by the service 1 for special users. Registration of the functional functions corresponding to the data processing operations in the computing device 100 needs to be triggered by the users at a service layer.

Functional functions corresponding to one or more data processing requests may be registered with the computing device 100 in the manner of S12(2).

It should be understood that, in some cases, the registration of the functional function only needs to be performed in any one of the foregoing manners S12(1) or S12(2). When the functional function corresponding to the data processing operation to be requested by the requesting device 200 includes not only a function in the storage device 112 of the computing device 100, but also some functions defined only in the service 1 of the requesting device 200, the registration of the functional function needs to be performed in the foregoing two manners S12(1) and S12(2).

In some other embodiments, the registration of the functional function may alternatively be performed by the scheduling apparatus 104, that is, the scheduling apparatus 104 loads the functional function from the storage device 112 to the memory 106 in advance, and/or the scheduling apparatus 104 registers, with the memory 106, the functional function received by the communication component 102.

In the foregoing S11, when the allocated functional function space in the memory 106 is memory space that can be accessed by all processing units in each processing unit set, when the functional function is registered, the management unit 1081 or the scheduling apparatus 104 stores the functional function in the foregoing general-purpose functional function space when performing the operations of S12(1) and S12(2). In the foregoing S11, when the memory 106 includes functional function space corresponding to each processing unit set, when the functional function is registered, the management thread may determine, based on a function identifier carried in the functional function registration request and predefined information about a processing unit set that processes a functional function corresponding to the function identifier, functional function space for storing the functional function corresponding to the request, and then store code of the functional function in the determined functional function space. In this way, a processing unit in a corresponding processing unit set can access the functional function space, and schedule the functional function to complete data processing.

S13. The management unit 1081 generates a scheduling rule, and configures the scheduling rule to the scheduling apparatus 104.

The management unit 1081 may generate the scheduling rule based on a configuration of an administrator in the computing device 100 or the requesting device 200, where the scheduling rule is a principle based on which the scheduling apparatus 104 schedules the data processing request. The scheduling rule may include a request forwarding policy, and the request forwarding policy indicates that the function identifier included in the data processing request corresponds to one or more processing unit sets. The request forwarding policy may be implemented in a plurality of manners, for example, may be implemented by a request forwarding table, a Hash table, a function, or the like. Take the request forwarding table as an example. The request forwarding table records a function identifier of at least one functional function, and in the request forwarding table, each function identifier corresponds to a processing unit set to which a request including the function identifier can be forwarded.

FIG. 6 is a schematic diagram of a request forwarding table including some function identifiers of a database service. As shown in FIG. 6, getkey() is a function identifier corresponding to a data query request, and a processing unit set to which a data processing request corresponding to the function identifier can be forwarded is the processing unit set 108. That is, the scheduling apparatus 104 may schedule the data processing request to any processing unit in the processing unit set 108 based on the request forwarding table. In FIG. 6, processing unit sets corresponding to function identifiers delete() and setkey() are the processing unit set 108 and the processing unit set 110. That is, data processing requests corresponding to the two function identifiers may be scheduled to a processing unit in the processing unit set 108 for execution, or may be scheduled to a processing unit in the processing unit set 110 for execution, which may be specifically determined based on a load status of each processing unit.

In some cases, the processing units included in the processing unit set 108 and the processing unit set 110 in the computing device 100 have different processing performance. The processing unit in the processing unit set 110 may be a high-performance processor core, or may be referred to as a big core. The big cores have characteristics of strong computing capabilities, high costs, and high power consumption. The processing unit in the processing unit set 108 may be a low-performance processor core, or may be referred to as a little core. The little cores have characteristics of weak computing capabilities, low costs, and low power consumption. For some data processing requests with a pre-estimated small computing amount but large concurrency amount, for example, data query requests for a B+ tree, a Hash table, and a linked list, when the foregoing request forwarding policy is generated, a function identifier of a functional function corresponding to the type of the data processing requests may be corresponding to only the processing unit set 108. In this way, when scheduling the data processing request based on the request forwarding policy, the scheduling apparatus 104 schedules the type of the data processing requests to the processing unit in the processing unit set 108 for processing, without occupying a resource of the processing unit set 110 or contending for a resource with a thread run on the processing unit in the processing unit set 110, so that the computing device 100 can use the resource of the processing unit more properly, and can obtain a data processing result of the type of the request more efficiently.

The scheduling rule may further include a scheduling policy, and the scheduling policy includes a priority policy, a load balancing policy, and the like. For example, when a function identifier in the request forwarding policy corresponds to a plurality of processing unit sets, a priority of each processing unit set corresponding to the function identifier may be set. For example, as shown in FIG. 6, for the processing unit set 108 and the processing unit set 110 that correspond to delete(), the priority policy that may be set is: When both the processing unit set 108 and the processing unit set 110 have an idle resource, the processing unit set 108 precedes the processing unit set 110. It should be understood that the priority policy may be specifically set based on each function identifier. For example, when each function identifier in a plurality of function identifiers corresponds to at least two processing unit sets, different priority policies may be set for the function identifiers. Alternatively, the priority policy may be set uniformly. For example, only a priority order of processing unit sets is set, and the priority order is applicable to function identifiers corresponding to the plurality of processing unit sets.

The load balancing policy is specifically used to determine, based on the determined busy/idle information of each processing unit in the processing unit set, the target processing unit for processing the current data processing request. A specific load balancing policy to be used is not limited in this application. For example, a minimum concurrency quantity policy, a minimum response time policy, a polling policy, or a random policy may be used.

The computing device 100 configures the generated scheduling rule to the scheduling apparatus 104, which is specifically that the management thread sends the scheduling rule to the cache in the scheduling apparatus 104. Alternatively, in some cases, when the scheduling rule is complex and occupies large storage space, the management thread may alternatively send the scheduling rule to the memory 106, and configure, in the scheduling apparatus 104, address information of space of the scheduling rule stored in the memory 106.

S14. The requesting device 200 performs connection initialization with the computing device 100.

The connection initialization performed by the requesting device 200 and the computing device 100 is mainly used to establish a connection between the requesting device 200 and the computing device 100, to support interaction of the data processing request and response. To improve communication efficiency, the requesting device 200 may usually communicate with the computing device 100 in a communication manner of the RDMA protocol. The connection initialization between the requesting device 200 and the computing device 100 is specifically QP link establishment, that is, the requesting device 200 and the computing device 100 exchange QP information, so that a request from the requesting device 200 can be reliably transmitted to a receive queue of a QP of the computing device 100 via a send queue of a QP.

It should be understood that the requesting device 200 and the computing device 100 may be connected in another connection manner, and specific connection initialization is correspondingly different. This is not limited herein.

It should be further understood that S14 may be performed simultaneously with any one of S11 to S13, or may be performed before S11. This is not limited in this application. The foregoing steps S11 to S13 do not forcibly limit an execution sequence of steps of an initialization procedure, and the steps may overlap in execution time.

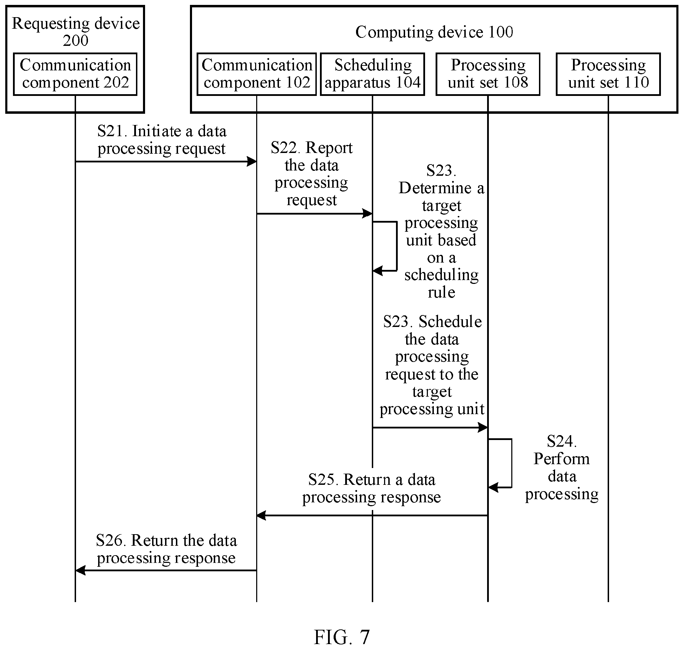

Through the initialization procedure in S11 to S14, the computing device 100 may interact with the requesting device 200 for data processing. The following specifically describes a procedure in which a computing device 100 processes a data processing request from a requesting device 200 with reference to FIG. 7.

S21. The requesting device 200 sends the data processing request to the computing device 100.

Specifically, a user process corresponding to an upper-layer service run by the requesting device 200 may send the data processing request to a communication component 202, and the communication component 202 sends the data processing request to the computing device 100. The communication component 202 sends the data processing request in a plurality of specific manners. For example, the data processing request may be encapsulated into an RPC-type request by using an RPC protocol, and sent to the computing device 100, or the data processing request may be encapsulated into an RMFC-type request by using a remote memory function call (remote memory function call, RMFC) protocol, and sent to the computing device 100.

In some other embodiments, a middleware, for example, a universal communication X (universal communication X, UCX) interface, may be further implemented in the requesting device 200. The user process corresponding to the upper-layer service run by the requesting device 200 may send the data processing request to the middleware. After performing unified format processing, the middleware rings a door bell of the communication component 202 (for example, a network interface card), and sends the data processing request to the communication component 202, so that the communication component 202 sends the data processing request to the computing device 100.

S22: A communication component 102 of the computing device 100 receives the data processing request, interacts with a scheduling apparatus 104, and transfers the data processing request to the scheduling apparatus 104.

After receiving the data processing request sent by the requesting device 200, the communication component 102 of the computing device 100 consumes a receive queue element (receive queue element, RQE) of a receive queue (receive queue, RQ) in a memory, and writes, into the memory, parameters included in the data processing request. The parameters in the data processing request may include a function identifier, an input parameter of a functional function, address information, and the like. The communication component 102 reports a message to the scheduling apparatus 104, for example, rings the door bell of a door bell register in the scheduling apparatus 104. Specifically, during door bell ringing, the carried data processing request includes a function identifier, and the function identifier indicates a functional function that needs to be called to process the data processing request. It should be understood that the parameters included in the data processing request carried when the communication component 102 rings the door bell of the scheduling apparatus 104 may be only some parameters in the data processing request sent by the requesting device 200 to the communication component 102, to save bandwidth. For example, after the communication component 102 stores, in the memory 106, the parameters such as the input parameter of the function in the data processing request obtained by the communication component 102, only addresses of the parameters are carried in the data processing request sent to the scheduling apparatus 104.

S23. The scheduling apparatus 104 selects a target processing unit set from at least one processing unit set based on the function identifier and a scheduling rule, determines a target processing unit in the target processing unit set, and schedules the request to the target processing unit, to enable the target processing unit to perform data processing.

Specifically, the scheduling apparatus 104 uses a cache in the apparatus to store the data processing request or uses cache overflow space in the memory to store the data processing request, and reads the function identifier in the data processing request. A processing unit set corresponding to the function identifier is queried from a request forwarding policy in the scheduling rule, and different processing may be performed based on different obtained query conditions, which are described below respectively.
(1) If it is configured, in the request forwarding policy, that only the processing unit set 110 processes the data processing request including the function identifier, the scheduling apparatus 104 further determines a target processing unit in the processing unit set 110 by using a load balancing policy based on obtained busy/idle information of each processing unit in the processing unit set 110, and notifies the determined target processing unit (for example, reports an interrupt to the target processing unit), so that the target processing unit obtains the parameters of the data processing request from the memory.
   It should be understood that the scheduling apparatus 104 may periodically obtain busy/idle information of a processing unit in each processing unit set, for example, obtain information about a consumer pointer corresponding to a queue of each processing unit. Therefore, when determining the processing unit, the scheduling apparatus 104 may determine, based on the busy/idle information, that a processing unit that is in an idle state or is about to be in an idle state is the target processing unit configured to process the data processing request.
(2) If it is configured, in the request forwarding policy, that only the processing unit set 108 processes the data processing request including the function identifier, the scheduling apparatus 104 further determines a target processing unit in the processing unit set 108 by using a load balancing policy based on obtained busy/idle information of each processing unit in the processing unit set 108, and notifies the determined target processing unit (for example, reports an interrupt to the target processing unit), so that the target processing unit obtains the parameters of the data processing request from the memory.
(3) If it is configured, in the request forwarding policy, that the processing unit set 108 or the processing unit set 110 can process the data processing request including the function identifier (that is, the request forwarding policy specifies that the function identifier corresponds to the processing unit set 108 and the processing unit set 110), the scheduling apparatus 104 further determines the target processing unit set based on a priority policy in the scheduling rule and the busy/idle information of the processing units in the processing unit set 108 and the processing unit set 110, further determines the target processing unit in the target processing unit set based on the load balancing policy, and notifies the determined target processing unit, so that the target processing unit obtains the parameters of the data processing request from the memory.

S24. The target processing unit performs data processing.

Specifically, it can be learned from S23 that the target processing unit may be a processing unit that is currently idle or has light load in the processing unit set 108 or the processing unit set 110, or may be a processing unit randomly selected from the processing unit set 108 or the processing unit set 110. As shown in FIG. 7, an example in which the target processing unit is the processing unit that is currently idle in the processing unit set 108 is used. The processing unit reads the parameter of the data processing request from the memory based on the received report information, calls a corresponding functional function in functional function space in the memory based on the parameter in the data processing request, for example, the function identifier or the input parameter of the functional function, and starts a new thread to execute the corresponding functional function, to implement data processing. For example, when the function identifier is getkey(), and the data processing request is a request for querying a key of data in a B+ tree, the target processing unit runs the functional function, accesses a main memory for a plurality of times to perform B+ tree pointer tracking, searches for a key corresponding to a value, and after the key corresponding to the value is retrieved, fills a result in an SQ in a corresponding QP.

S25. The target processing unit returns a data processing response to the communication component 102.

Specifically, the target processing unit may ring the door bell of the communication component 102, so that the communication component 102 may read a data processing result in the corresponding SQ.

S26. The computing device 100 returns the data processing response to the requesting device 200.

Specifically, the communication component 102 of the computing device 100 reads the data processing result from the SQ, and returns, to the communication component 202 of the requesting device 200, the data processing response including the data processing result.

The requesting device 200 consumes the RQE to receive the data processing result, and fills a completion queue element (completion queue element, CQE) of a completion queue (completion queue, CQ). A related thread in the requesting device 200 may read a corresponding RQE based on information about the CQE, to obtain the data processing result.

Through the foregoing inter-device data processing procedures S21 to S26, the computing device 100 completes, by the scheduling of the scheduling apparatus 104, scheduling the data processing request to the target processing unit based on a corresponding configuration for execution, so that the computing device 100 does not need to occupy a resource of the processing unit to obtain and schedule the request.

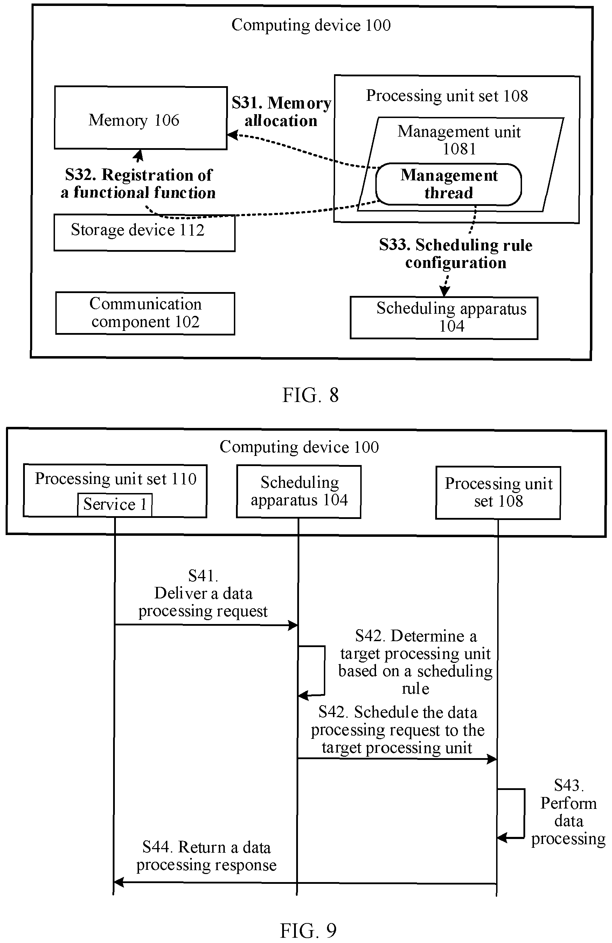

For an intra-device data processing scenario, the computing device 100 shown in FIG. 4 in this application can also release resources of more processing units for data processing, so that processing resources in the device are more properly used. With reference to FIG. 8, the following first describes an initialization procedure that needs to be performed before a computing device 100 implements data processing in the intra-device data processing scenario.

In FIG. 8, an example in which a management unit 1081 in the computing device 100 performs the initialization procedure is used. As shown in FIG. 8, the initialization procedure includes the following steps.

S31. The management unit 1081 allocates a memory 106. For an intra-device data processing scenario, for memory space allocated by the management unit 1081, refer to step S11 of the initialization procedure in the foregoing inter-device data processing scenario. Details are not described herein again.

In some cases, for the intra-device data processing scenario, a specific size of each memory space that needs to be allocated may be different from that in the inter-device data processing scenario. For example, in the intra-device data processing scenario, a data processing request delivered by an upper-layer service may be sent to a scheduling apparatus 104 through a data transmission link in the device, and a communication component 102 does not need to call the scheduling apparatus 104. Therefore, in the intra-device data processing scenario, call queue space needs to include only a queue that needs to be consumed when the scheduling apparatus 104 calls a processing unit in a processing unit set. Therefore, when the management unit 1081 allocates the call queue space, smaller space may be allocated compared with that in S11.

It should be noted that, a specific allocation amount of each type of memory space and a memory space segment that should be allocated may be pre-configured by an administrator or configured in advance.

S32. Perform registration of a functional function.

In the intra-device data processing scenario, a functional function that needs to be called to perform the data processing request delivered by the upper-layer service is usually stored in a storage device 112 of the computing device 100. Therefore, in this scenario, only an operation that is the same as that in S12(1) needs to be performed for the registration of the functional function. For details, refer to the description in S12(1). Details are not described herein again.

In some cases in which the computing device 100 does not store the functional function that needs to be called for the data processing request delivered by the upper-layer service, when performing the registration of the functional function, the administrator may store, in advance in a manner of uploading the functional function, the functional function required by the service into the memory 106 of the computing device 100.

It should be noted that the registration of the functional function may be performed by the management device 1081, or may be performed by the scheduling apparatus 104. In FIG. 8, an example in which the management unit 1081 performs the registration of the functional function is used.

S33. The management unit 1081 generates a scheduling rule, and configures the scheduling rule to the scheduling apparatus 104.

For specific execution of this step, refer to S13. Details are not described herein again.

It should be understood that, the foregoing steps S31 to S33 do not forcibly limit an execution sequence of the steps of the initialization procedure, and the steps may overlap in execution time.

After performing the foregoing initialization procedure S31 to S33, the computing device 100 may process the data processing request delivered by the upper-layer service. The following specifically describes a data processing method procedure performed by a computing device 100 in an intra-device data processing scenario with reference to FIG. 9.

S41. A service 1 run on the computing device 100 delivers a data processing request to a scheduling apparatus 104.

Specifically, one or more services may be run on the computing device 100. The services are actually run on processing units in a processing unit set in the computing device 100. Generally, the upper-layer services are run on a big core with a strong computing capability. For example, the service 1 shown in FIG. 9 in this embodiment is run on a processing unit of a processing unit set 110, and a specific process in which the service 1 delivers the data processing request to the scheduling apparatus 104 may be: The service 1 generates the data processing request, and a processing unit that is in the processing unit set 110 and that runs a thread of the service 1 transmits the data processing request to the scheduling apparatus 104 through a data transmission link in the computing device 100. The data transmission link may be an on-chip bus such as a PCIe link or an HCCS link.

In some other embodiments, to save bandwidth, the processing unit that runs the thread of the service 1 writes a parameter (for example, an input parameter of a functional function, a function identifier, and identification information of the processing unit) in the data processing request into a request queue in a memory 106, and generates another lightweight data processing request. The lightweight data processing request carries a function identifier corresponding to the functional function that needs to be called for the data processing request, and an address that is of the parameter of the data processing request generated by the processing unit and that is in the memory. The processing unit that runs the thread of the service 1 sends the data processing request to the scheduling apparatus 104 through the data transmission link.

S42. The scheduling apparatus 104 selects a target processing unit set from at least one processing unit set based on the function identifier and a scheduling rule, determines a target processing unit in the target processing unit set, and schedules the request to the target processing unit, to enable the target processing unit to perform data processing.

For a specific manner in which the scheduling apparatus 104 determines the target processing unit set and the target unit in the target processing unit set based on the function identifier and the scheduling rule, refer to the foregoing description of S23. Details are not described herein again.

For example, the service 1 is a training service of an artificial intelligence (artificial intelligence, AI) model, and the data processing request sent by the service 1 is a data retrieval and accumulation request in an AI model training process. Because a computing amount required for the data retrieval and accumulation request is small, it is pre-configured, in a request forwarding policy, that the data retrieval and accumulation request is executed only by a processing unit set 108 that has low power consumption and a low computing capability in the computing device 100. Therefore, after receiving the data retrieval and accumulation request including a function identifier searchacc(), the scheduling apparatus 104 may search a request forwarding policy (for example, a request forwarding table) in the scheduling rule based on the function identifier searchacc(), and determine that a processing unit set corresponding to the function identifier is the processing unit set 108. Further, the scheduling apparatus 104 randomly determines a processing unit from the processing unit set 108 based on a load balancing policy, for example, a random policy. The processing unit is the target processing unit. The scheduling apparatus 104 notifies the target processing unit in the processing unit set 108, to enable the target processing unit to obtain the parameter of the data processing request from the memory.

S43. The target processing unit performs data processing.

The example in which the data processing request is the data retrieval and accumulation request in the AI model training process is still used as an example. The target processing unit obtains the parameter of the data processing request from the memory, caches a result when finding corresponding data based on an index of data that needs to be searched for in the parameter, continues to search for next data, accumulates the data with the previous result, and repeats the foregoing operations until all data that needs to be searched for is found and accumulated, completes data processing, and obtains a data processing result.

S44. The target processing unit returns a data processing response to the service 1.

Specifically, the target processing unit may pack data processing results into a data packet, write the data packet into a queue in the memory, and send a notification of the data processing response (for example, report an interrupt) to a processing unit in which the service 1 is located. The processing unit in which the service 1 is located may read a corresponding queue in the memory based on the notification, and read the data processing result.

Through the foregoing S41 to S44, the computing device 100 processes a data processing request from the upper-layer service. The scheduling apparatus 104 is introduced into the computing device, so that a resource of the processing unit in the computing device 100 may be more used for service running and request processing, that is, to enable the resource of the processing unit in the computing device 100 to be more properly used. Further, the computing device 100 is configured to include processing unit sets that have different computing capabilities and different power consumption, so that the computing device 100 can schedule the data processing request to a processing unit in a more appropriate processing unit set based on a configuration, to implement more efficient and stable data processing.

This application not only provides the computing device 100 described in FIG. 4 and the corresponding text in the foregoing embodiment, but also provides the initialization method and the data processing method described in FIG. 5 to FIG. 9 and the corresponding texts in the foregoing embodiments. This application further provides a scheduling apparatus, that is, the scheduling apparatus 104 described in the foregoing embodiment.

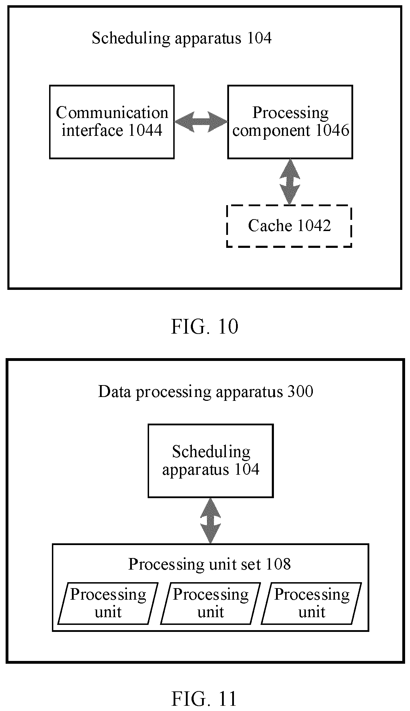

FIG. 10 is a schematic diagram of an internal structure of a scheduling apparatus 104. As shown in FIG. 10, the scheduling apparatus 104 includes a communication interface 1044 and a processing component 1046.

The communication interface 1044 may be configured to perform operations of receiving a data processing request and sending a request (for example, ringing a door bell) to a target processing unit by the scheduling apparatus 104 in the foregoing embodiment.

The processing component 1046 is configured to perform the operation that the scheduling apparatus 104 determines the target processing unit set and the target processing unit based on the function identifier and the scheduling rule described in the steps S23 and S42 in the foregoing embodiments.

Optionally, the scheduling apparatus 104 may further include a cache 1042, where the cache 1042 is configured to store the configured scheduling rule and/or store the data processing request.

The following describes specific functions of the scheduling apparatus 104.

In an embodiment, the communication interface 1044 in the scheduling apparatus 104 is configured to receive the data processing request, where the data processing request includes a function identifier, and the function identifier indicates a function that needs to be called to process the data processing request.

The processing component 1046 is configured to determine a first processing unit set from at least two processing unit sets based on the function identifier, and determine a target processing unit in the first processing unit set, where the target processing unit is configured to process the data processing request.

Further, the scheduling apparatus 104 may be deployed on a computing device, and the data processing request is sent by a network interface card in the computing device to the scheduling apparatus, or the data processing request is from a service run on the computing device.

Further, the data processing request is a data query request of a relational database, or the data processing request is a data retrieval and accumulation request of an artificial intelligence AI model training service.

Further, the processing component 1046 is specifically configured to determine the first processing unit set from the at least two processing unit sets based on the function identifier and the scheduling rule.

Further, the scheduling rule includes a request forwarding policy, where the request forwarding policy indicates that the function identifier corresponds to one or more processing unit sets. The one or more processing unit sets are processing unit sets in the at least two processing unit sets.

Further, the scheduling rule further includes a priority policy, and when the function identifier in the data processing request corresponds to a plurality of processing unit sets, the processing component 1046 is specifically configured to select the first processing unit set from the corresponding plurality of processing unit sets based on the priority policy.

Further, the scheduling rule further includes a load balancing policy, and the processing component is specifically configured to determine the target processing unit from the first processing unit set based on the load balancing policy.

This application further provides a data processing apparatus. The data processing apparatus includes at least one processing unit set and the foregoing scheduling apparatus 104.

FIG. 11 is used as an example. A data processing apparatus 300 includes the foregoing scheduling apparatus 104 and the foregoing processing unit set 108. The scheduling apparatus 104 is configured to implement the functions described in the foregoing embodiments, and details are not described herein again. The processing unit set 108 includes at least one processing unit, and the at least one processing unit may be configured to run a service and process a data processing request.

The data processing apparatus 300 may be specifically a chip disposed on a mainboard of the computing device 100. In the chip, because a distance between the scheduling apparatus 104 and the processing unit in the processing unit set 108 is short and a communication path is short, communication that is more efficient can be implemented between the scheduling apparatus 104 and the processing unit in the processing unit set 108, and the data processing request can be scheduled more quickly.

In some other embodiments, the data processing apparatus 300 may include all processing unit sets in the computing device 100 and the scheduling apparatus 104. Therefore, the scheduling apparatus 104 communicates with any processing unit on chip, to reduce power consumption and improving communication efficiency.

A person skilled in the art may be aware that, in combination with the examples described in embodiments disclosed in this specification, apparatuses, computing devices, and method steps may be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data processing method, wherein the method is applied to a computing device, the computing device comprises a scheduling apparatus and at least two processing unit sets, each processing unit set comprises at least one processing unit, the scheduling apparatus is communicatively connected to processing units in the at least two processing unit sets, and the method comprises:
receiving, by the scheduling apparatus, a data processing request, wherein the data processing request comprises a function identifier, and the function identifier indicates a function that needs to be called to process the data processing request;
determining, by the scheduling apparatus, a first processing unit set from the at least two processing unit sets based on the function identifier, and determining a target processing unit in the first processing unit set; and
processing, by the target processing unit, the data processing request to obtain a data processing result.

2. The method according to claim 1, wherein a computing capability of a processing unit in the first processing unit set is lower than a computing capability of a processing unit comprised in a second processing unit set in the at least two processing unit sets.

3. The method according to claim 1 or 2, wherein power consumption of the processing unit in the first processing unit set is lower than power consumption of the processing unit comprised in the second processing unit set in the at least two processing unit sets.

4. The method according to any one of claims 1 to 3, wherein the data processing request is sent by a network interface card in the computing device to the scheduling apparatus.

5. The method according to any one of claims 1 to 3, wherein the data processing request is from a service run on the computing device.

6. The method according to any one of claims 1 to 5, wherein the data processing request is a data query request of a relational database, or the data processing request is a data retrieval and accumulation request of an artificial intelligence AI model training service.

7. The method according to any one of claims 1 to 6, wherein the determining, by the scheduling apparatus, a first processing unit set from the at least two processing unit sets based on the function identifier, and determining a target processing unit in the first processing unit set specifically comprises:
determining, by the scheduling apparatus, the first processing unit set from the at least two processing unit sets based on the function identifier and a scheduling rule, and determining the target processing unit in the first processing unit set.

8. The method according to claim 7, wherein the scheduling rule comprises a request forwarding policy, the request forwarding policy indicates that the function identifier corresponds to the first processing unit set, or the request forwarding policy indicates that the function identifier corresponds to the first processing unit set and another processing unit set, and the another processing unit set is a subset of the at least two processing unit sets.

9. The method according to claim 8, wherein the scheduling rule further comprises a priority policy, and when the function identifier in the data processing request corresponds to the first processing unit set and the another processing unit set, the scheduling apparatus determines the first processing unit set from the first processing unit set and the another processing unit set based on the priority policy.

10. The method according to any one of claims 7 to 9, wherein the scheduling rule comprises a load balancing policy, and the determining a target processing unit in the first processing unit set comprises:
determining the target processing unit from the first processing unit set based on the load balancing policy.

11. The method according to any one of claims 1 to 10, wherein before the receiving, by the scheduling apparatus, a data processing request, the method further comprises:
initializing, by a management unit in the computing device, the computing device.

12. The method according to claim 11, wherein the initializing, by a management unit, the computing device comprises:
configuring, by the management unit, the scheduling rule for the scheduling apparatus.

13. The method according to claim 11 or 12, wherein the initializing, by a management unit, the computing device comprises:
allocating memory space for a functional function corresponding to the function that needs to be called for the data processing request; and
storing the functional function in the memory space.

14. The method according to any one of claims 1 to 13, wherein the processing, by the target processing unit, the data processing request comprises:
calling, by the target processing unit based on the function identifier, the functional function corresponding to the function; and
processing the data processing request based on a parameter of the data processing request and the functional function.

15. The method according to any one of claims 1 to 14, wherein after the determining, by the scheduling apparatus, a first processing unit set from the at least two processing unit sets based on the function identifier, and determining a target processing unit in the first processing unit set, the method further comprises:
reporting, by the scheduling apparatus, a notification to the target processing unit; and
reading, by the target processing unit, the parameter of the data processing request from a memory of the computing device based on the notification, to process the data processing request.

16. A computing device, wherein the computing device comprises a scheduling apparatus and at least two processing unit sets, each processing unit set comprises at least one processing unit, and the scheduling apparatus is communicatively connected to processing units in the at least two processing unit sets;
the scheduling apparatus is configured to receive a data processing request, wherein the data processing request comprises a function identifier, and the function identifier indicates a function that needs to be called to process the data processing request;
the scheduling apparatus is further configured to determine a first processing unit set from the at least two processing unit sets based on the function identifier, and determine a target processing unit in the first processing unit set; and
the target processing unit is configured to process the data processing request, to obtain a data processing result.

17. The computing device according to claim 16, wherein a computing capability of a processing unit in the first processing unit set is lower than a computing capability of a processing unit comprised in a second processing unit set in the at least two processing unit sets.

18. The computing device according to claim 16 or 17, wherein power consumption of the processing unit in the first processing unit set is lower than power consumption of the processing unit comprised in the second processing unit set in the at least two processing unit sets.

19. The computing device according to any one of claims 16 to 18, wherein the scheduling apparatus and the first processing unit set are deployed on a same die (DIE), or the scheduling apparatus and the second processing unit set in the at least two processing unit sets are deployed on a same die (DIE).

20. The computing device according to any one of claims 16 to 19, wherein the scheduling apparatus is a pluggable chip on the computing device.

21. The computing device according to any one of claims 16 to 20, wherein the data processing request is sent by a network interface card in the computing device to the scheduling apparatus, or the data processing request is from a service run on the computing device.

22. The computing device according to any one of claims 16 to 21, wherein the data processing request is a data query request of a relational database, or the data processing request is a data retrieval and accumulation request of an artificial intelligence AI model training service.

23. The computing device according to any one of claims 16 to 22, wherein the computing device further comprises a management unit, and the management unit is located in the at least two processing unit sets, wherein
the management unit is configured to initialize the computing device.

24. The computing device according to claim 23, wherein the management unit is specifically configured to configure a scheduling rule for the scheduling apparatus.

25. The computing device according to claim 23 or 24, wherein the management unit is specifically configured to allocate memory space for a functional function corresponding to the function that needs to be called for the data processing request, and store the functional function in the memory space.

26. The computing device according to any one of claims 16 to 25, wherein
the scheduling apparatus is specifically configured to determine the first processing unit set from the at least two processing unit sets based on the function identifier and the scheduling rule, and determine the target processing unit in the first processing unit set.

27. The computing device according to claim 26, wherein the scheduling rule comprises a request forwarding policy, the request forwarding policy indicates that the function identifier corresponds to the first processing unit set, or the request forwarding policy indicates that the function identifier corresponds to the first processing unit set and another processing unit set, and the another processing unit set is a subset of the at least two processing unit sets.

28. The computing device according to claim 27, wherein the scheduling rule further comprises a priority policy; and
when the function identifier in the data processing request corresponds to the first processing unit set and the another processing unit set, the scheduling apparatus is specifically configured to determine the first processing unit set from the first processing unit set and the another processing unit set based on the priority policy.

29. The computing device according to any one of claims 26 to 28, wherein the scheduling rule comprises a load balancing policy; and
the scheduling apparatus is specifically configured to determine the target processing unit from the first processing unit set based on the load balancing policy.

30. A scheduling apparatus, wherein the scheduling apparatus comprises a communication interface and a processing component, the communication interface is coupled to the processing component, and the scheduling apparatus is further communicatively connected to processing units in at least two processing unit sets through the communication interface, wherein
the communication interface is configured to receive a data processing request, wherein the data processing request comprises a function identifier, and the function identifier indicates a function that needs to be called to process the data processing request; and
the processing component is configured to determine a first processing unit set from the at least two processing unit sets based on the function identifier, and determine a target processing unit in the first processing unit set, wherein the target processing unit is configured to process the data processing request.

31. The apparatus according to claim 30, wherein the scheduling apparatus is deployed on a computing device, and the data processing request is sent by a network interface card in the computing device to the scheduling apparatus, or the data processing request is from a service run on the computing device.

32. The apparatus according to claim 30 or 31, wherein the data processing request is a data query request of a relational database, or the data processing request is a data retrieval and accumulation request of an artificial intelligence AI model training service.

33. The apparatus according to any one of claims 30 to 32, wherein
the processing component is specifically configured to determine the first processing unit set from the at least two processing unit sets based on the function identifier and a scheduling rule, and determine the target processing unit in the first processing unit set.

34. The apparatus according to claim 33, wherein the scheduling rule comprises a request forwarding policy, the request forwarding policy indicates that the function identifier corresponds to the first processing unit set, or the request forwarding policy indicates that the function identifier corresponds to the first processing unit set and another processing unit set, and the another processing unit set is a subset of the at least two processing unit sets.

35. The apparatus according to claim 34, wherein the scheduling rule further comprises a priority policy; and
when the function identifier in the data processing request corresponds to the first processing unit set and the another processing unit set, the processing component is specifically configured to determine the first processing unit set from the first processing unit set and the another processing unit set based on the priority policy.

36. The apparatus according to any one of claims 33 to 35, wherein the scheduling rule comprises a load balancing policy; and
the processing component is specifically configured to determine the target processing unit from the first processing unit set based on the load balancing policy.

37. A data processing apparatus, wherein the data processing apparatus comprises at least one processing unit set and the scheduling apparatus according to any one of claims 30 to 36.
